Europäisches Patentamt

European Patent Office

Office européen des brevets

(11) Publication number: **0 058 056**

**A2**

(12) EUROPEAN PATENT APPLICATION

(21) Application number: 82300566.5

(22) Date of filing: 04.02.82

(51) Int. Cl.³: **G 01 F 23/28**
G 08 C 19/36, H 04 B 9/00

(30) Priority: 11.02.81 GB 8104180

(43) Date of publication of application:
18.08.82 Bulletin 82/33

(84) Designated Contracting States:
DE FR GB

(71) Applicant: ANDERSON STRATHCLYDE LIMITED
Anderson House 47 Broad Street
Glasgow, G40 2QW Scotland(GB)

(72) Inventor: Mackie, Kenmuir
71 Lockpark Avenue
Carluke(GB)

(72) Inventor: Speirs, Alisdair Blair Hislop
11 Victoria Road
Lenzie(GB)

(74) Representative: Arthur, John William et al,
FITZPATRICKS 48 St. Vincent Street
Glasgow G2 5TT Scotland(GB)

(54) Apparatus for and method of continual remote monitoring of a local condition of a liquid in a machine part.

(57) In a method of and apparatus for continual remote monitoring of a local condition, such as the temperature, the pressure, or the volume, of a liquid in a machine in operation and which includes one or more parts wherein liquid is contained and fulfils a function the success of which is contingent upon a variable quantity in a range departure from which is susceptible of interfering with, or at least impairing to a greater or lesser degree, the operation of the machine, light is transmitted by means of optical fibres (13 to 18) from a source (12) to light-responsive indicating means (11) along a trajectory passing through the liquid container, and there is mounted in the container an opaque plate (41) the position or attitude of which changes as the quantity to be monitored of the liquid varies such that a warning indication is given when said liquid quantity departs from said range.

The light is preferably split into a plurality of beams passing through the container such that the plate affects each beam in succession as said liquid quantity varies.

Preferably, the optical fibres are contained in a bundle outside the container and are divided into separate optical paths on each side of the plate within the container, the plate and the divided optical paths being contained in a closed casing (20) located within the liquid container.

Fig. 1:

"Apparatus for and Method of Continual Remote
Monitoring of a Local Condition of a Liquid in a
Machine Part"

This invention relates to apparatus for and a
method of continual remote monitoring of a local
condition, such as the temperature, the pressure, or
the volume, of a liquid in a machine in operation and
which includes one or more parts wherein liquid is
contained and fulfils a function the success of which
is contingent upon a variable quantity in a range
departure from which is susceptible of interfering with,
or at least impairing to a greater or lesser degree, the
operation of the machine.

The invention is applicable, for example, to the
continual monitoring of the oil level in the tank of
mining machinery in operation.

It is presently known to monitor such machinery
oil levels by mechanical means, which is difficult to
do, and by electrical means, which of course must be
either flameproof or intrinsically safe. Thus both
known forms of monitoring have disadvantages.

An object of the present invention is to obviate or
mitigate these disadvantages.

In accordance with the present invention, a method
of continual remote monitoring of a local condition of a
liquid as aforesaid comprises transmitting light by means
of optical fibres from a source to light-responsive
indicating means along a trajectory passing through the
liquid container, and mounting in the container an
opaque plate the position or attitude of which changes
as the quantity to be monitored of the liquid varies
such that a warning indication is given when said
liquid quantity departs from said range.

Preferably, the light is split into a plurality of
beams passing through the container such that the plate
affects each beam in succession as said liquid quantity varies.

Also, in accordance with the present invention apparatus for continual remote monotoring of a local condition of a liquid as aforesaid comprises a light source, a light-responsive indicating means including a warning indicator, optical fibres transmitting light from the source to the indicating means along a trajectory passing through the liquid container, and an opaque plate mounted in the container in such manner that its position or attitude can change in response to variation of the quantity to be monitored of the liquid and the warning indicator is activated when said liquid quantity departs from said range.

Preferably, the optical fibres produce within the container a plurality of light beams which are successively affected by said plate as the liquid quantity varies.

Preferably also, the optical fibres are contained in a bundle outside the container, said fibres being divided into separate optical paths on each side of the plate within the container.

Preferably also, the plate and the divided optical paths are contained in a closed casing located within the liquid container.

Embodiments of the present invention will now be described, by way of example, with reference to the accompanying drawings, in which:-

Fig. 1 is a diagrammatic view of apparatus for the continual remote monitoring of a local condition of a liquid as aforesaid;

Fig. 2 is a diagrammatic view of apparatus for monitoring the liquid level in a container;

Fig. 3 is an elevation of a casing within the container and mounting a plate for pivotal movement;

Fig. 4 is a plan view of the casing:

Fig. 5 is a sectional end elevation of the casing;

Fig. 6 illustrates an optical fibre source and receiver, a connection into the liquid container and the plate casing; and

Fig. 7 is a sectional side view of the casing.

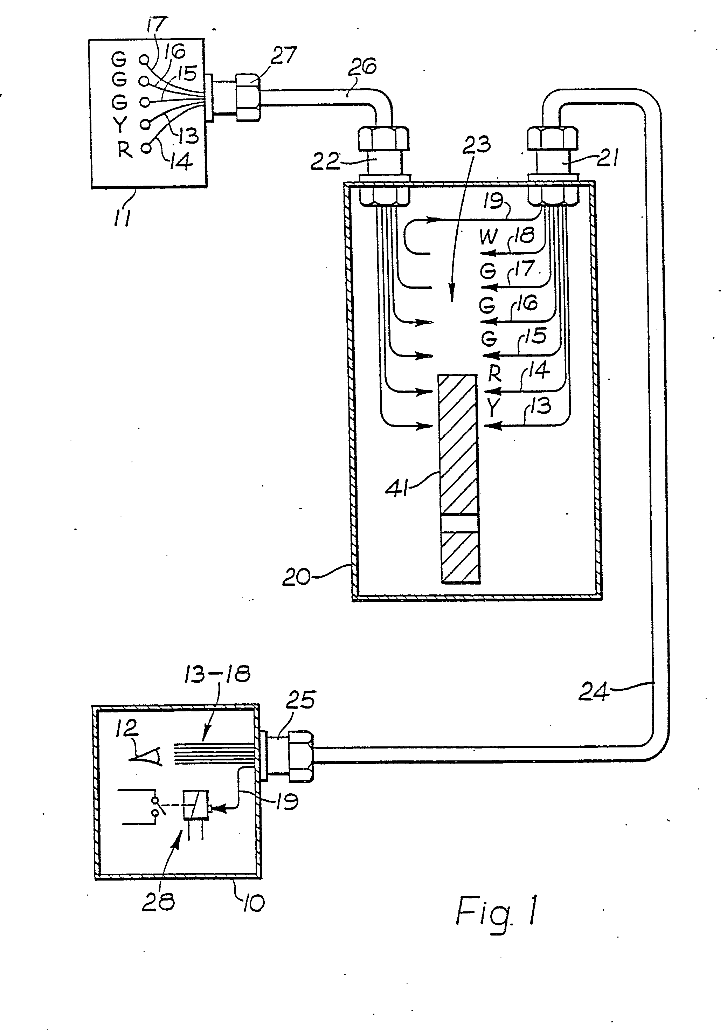

Fig. 1 is a generic illustration of apparatus in accordance with the invention. The liquid whereof a variable quantity is to be monitored is contained in a container (not shown) remote from which are a switchbox 10 and an indicator panel 11 so disposed that light beams collected from an emitter 12 in the switchbox 10 by the individual fibres of a bundle of six optical fibres 13, 14, 15, 16, 17 and 18 pass into the container whence five of the light beams may selectively continue on to the indicator panel 11 and the sixth 18 returns to the switchbox 10 by way of a seventh optical fibre 19.

Within the container, at an upper level therein, is mounted a closed casing 20 of rectangular box shape. The six optical fibres 13 to 18 pass into the casing through a coupling 21 at the top and towards one side of the casing 20, and the five optical fibres 13 to 17 leave the casing through a coupling 22 at the top and towards the opposite side of the casing 20. The fibres 13 to 17 extend to different depths in the casing and have horizontal stretches which are in a vertically-spaced series and are divided to provide a parallel-sided gap 23. The fibre 18 has a horizontal stretch spaced above the others and which terminates at the entry side of the gap 23 to be continued at the other side of the gap by a short horizontal stretch of the seventh optical fibre 19 which has an upward return bend to a straight stretch extending across the gap 23 and closing same off from above prior to leaving the casing 20 through the coupling 21. The bundle of optical fibres 13 to 18 is contained in flexible armouring 24 between the coupling 21 and a coupling 25 through which said fibres pass into the switchbox 10.  Likewise the bundle of optical
fibres 13 to 17 is contained in flexible armouring 26
between the coupling 22 and a coupling 27 through which
said fibres pass to the indicating panel 11.

The light beams travelling along the optical fibres
13 to 17 from the emitter 12, provided they are not
intercepted in the casing 20, illuminate lamps at the
indicating panel 11, the lamps then illuminated through
the fibres 15, 16 and 17 displaying the colour green,
that illuminated through the fibre 13 displaying the
colour yellow, and that illuminated through the fibre 14
displaying the colour red.  The colours green, yellow
and red have the usual signification.  The light beam
travelling along the optical fibre 18, if not interrupted in the casing 20, crosses the gap and continues
along the optical fibre 19 back to the switchbox 10
wherein the fibre 19 is turned away from the fibres 13
to 18 and focuses white light on a photo-sensitive receiver 28 and maintains the supply for operation of
the machine.

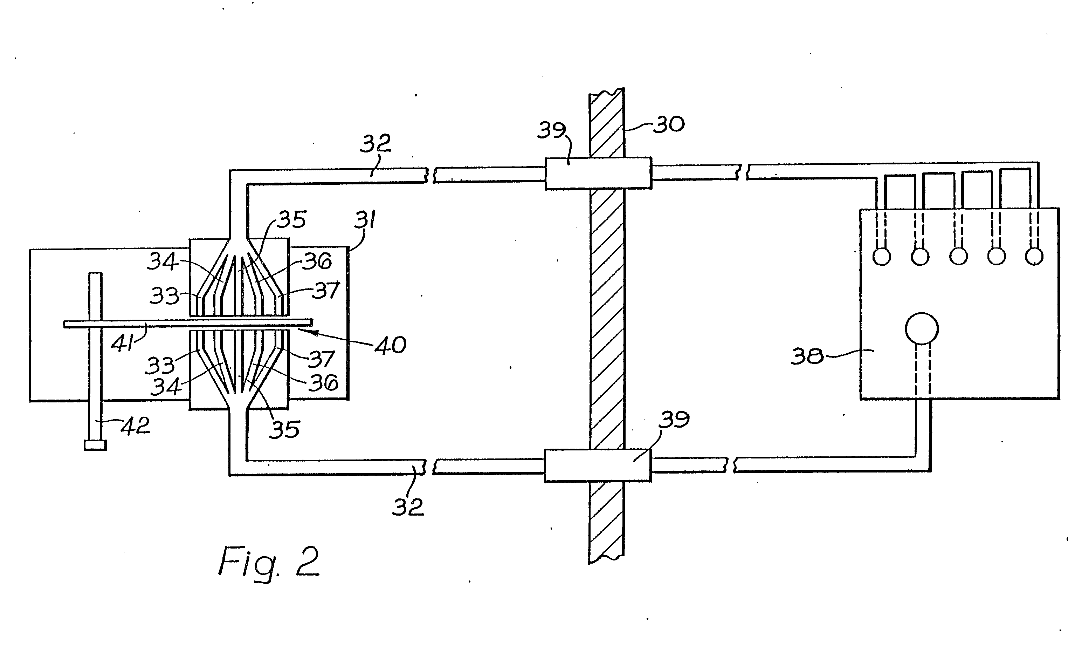

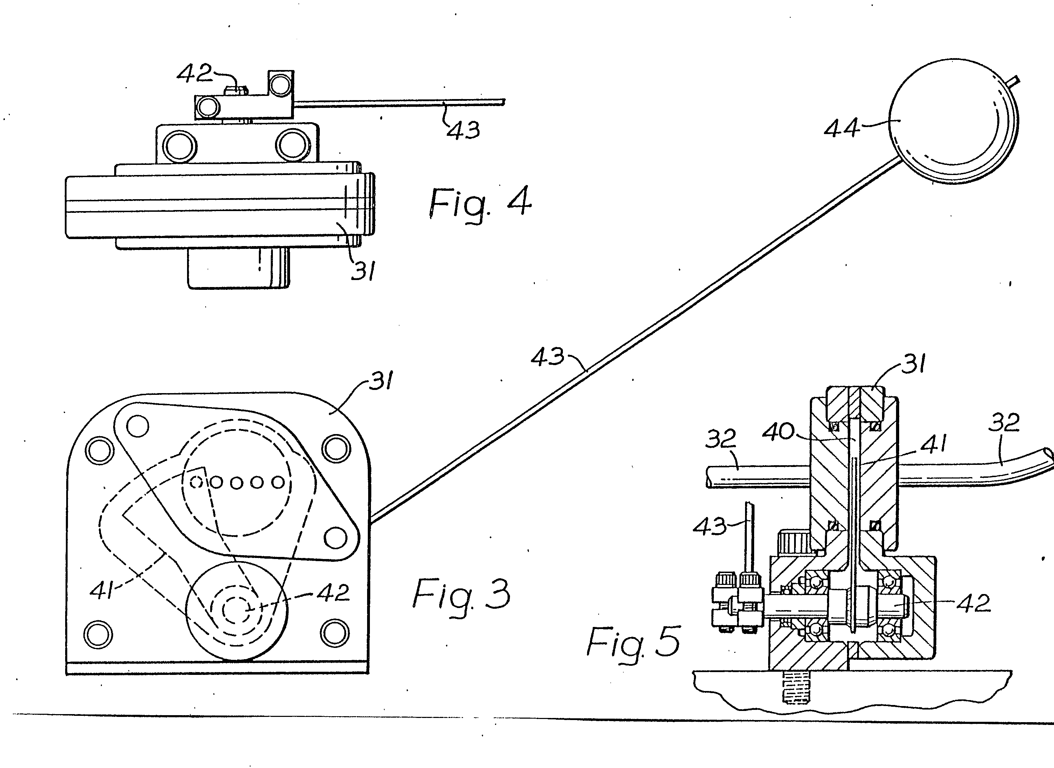

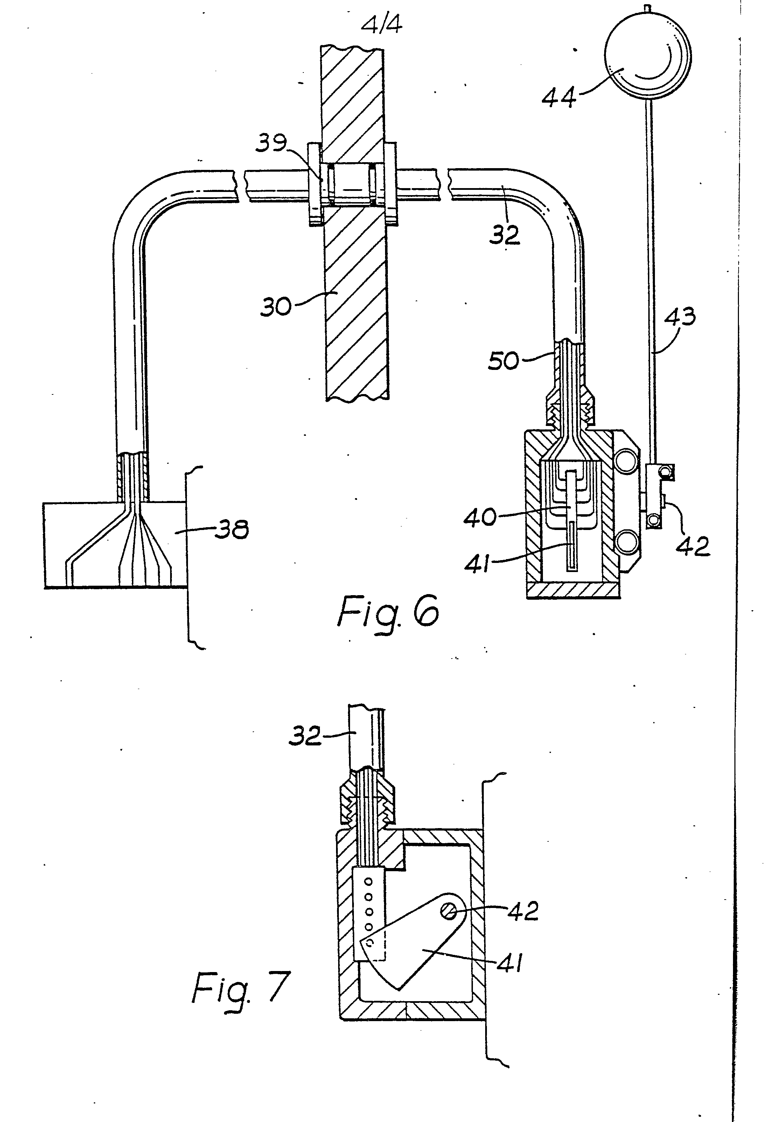

Referring now to Figs. 2 to 7 of the drawings, a
liquid container, one wall of which is shown at 30 in
Fig. 2 has mounted therein a casing 31 into and from
which extend a bundle 32 of five optical fibres 33
to 37 which passes through the container wall 30 from and
to an external source/receiver 38 remote from the
container.  At each passage through the container wall
30 the bundle 32 of five optical fibres extends into
and from a coupling 39 enabling the stretches of
fibres external of the casing to be connected or
disconnected.  In practice, as illustrated in Fig. 6,
the bundle 32 of optical fibres is sheathed in
flexible armouring 50.

Within the casing 31, the bundle 32 of five optical
fibres is separated into its constituent fibres 33 to
37 which have equi-spaced straight stretches intermediate which they are divided to provide a parallel-sided gap 40 through which an opaque plate 41 can swing.

The plate 41 is mounted on a spindle 42 which extends out of the casing 31 through a sealing gland and is connected to an arm 43 which carries a float 44. Thus, as the liquid level in the container falls the plate pivots upwards and successively interrupts the light beam trajectories across the gap along the individual optical fibres 33 to 37.

In this embodiment, the four light beams to be first interrupted as the plate 41 pivots upwards individually display the colour green at the receiver so that the level of liquid in the tank can be ascertained from the number of green lamps illuminated. As the liquid level dimishes the float is lowered, the plate pivots and successively interrupts the light beam trajectories along the individual optical fibres, and, at each such interruption, the pertaining signal lamp at the receiver is extinguished. When the level of the liquid in the container reaches a critical low, the plate 41 clears the gap where it divides the fifth optical fibre and the light beam resulting displays a red warning lamp.

In the simplest form provision is made for illumination of only one green lamp and the red lamp.

The apparatus hereinbefore described with reference to Figs. 2 to 7 is designed for use in the mining industry and provides safe and easily operated means for monitoring the level of oil in a tank from a location remote from the machinery of which the tank forms part. Due to the coupling in the tank wall, the external optical fibre bunches can be disconnected when not required. The casing within which the plate and divided optical fibre paths are located is normally a fixture in the tank though it can be removed as required.

. CLAIMS

1. A method of continual remote monitoring of a local
condition, such as the temperature, the pressure, or
the volume, of a liquid in a machine in operation and
which includes one or more parts wherein liquid is
contained and fulfils a function the success of which
is contingent upon a variable quantity in a range
departure from which is susceptible of interfering with,
or at least impairing to a greater or lesser degree,
the operation of the machine, said method comprising
transmitting light by means of optical fibres from a
source to light-responsive indicating means along
a trajectory passing through the liquid container,
and mounting in the container an opaque plate the
position or attitude of which changes as the quantity
to be monitored of the liquid varies such that a
warning indication is given when said liquid quantity
departs from said range.

2. A method as claimed in claim 1, in which the
light is split into a plurality of beams passing through
the container such that the plate affects each beam
in succession as said liquid quantity varies.

3. Apparatus for continual remote monitoring of a local
condition, such as the temperature, the pressure, or
the volume, of a liquid in a machine in operation and
which includes one or more parts wherein liquid is
contained and fulfils a function the success of which is
contingent upon a variable quantity in a range departure
from which is susceptible of interfering with, or at least
impairing to a greater or lesser degree, the operation
of the machine, said apparatus comprising a light source,
a light-responsive indicating means including a warning
indicator, optical fibres transmitting light from the
source to the indicating means along a trajectory
passing through the liquid container, and an opaque plate mounted in the container in such manner that
its position or attitude can change in response to
variation of the quantity to be monitored of the
liquid and the warning indicator is activated when
said liquid quantity departs from said range..

4. Apparatus as claimed in claim 3, in which the
optical fibres produce within the container a
plurality of light beams which are successively
affected by said plate as the liquid quantity varies.

5. Apparatus as claimed in claim 3 or 4 in which
the optical fibres are contained in a bundle outside
the container, said fibres being divided into
separate optical paths on each side of the plate
within the container.

6. Apparatus as claimed in claim 5, in which
the plate and the divided optical paths are contained in
a closed casing located within the liquid container.

Fig. 1

Fig. 2

0058056

Fig. 4

Fig. 5

Fig. 3

4/4

Fig. 6

Fig. 7